**Europäisches Patentamt**

**European Patent Office**

**Office européen des brevets**

(19)

(11) Veröffentlichungsnummer: **0 201 493**
**B1**

(12) **EUROPÄISCHE PATENTSCHRIFT**

(45) Veröffentlichungstag der Patentschrift:
04.11.87

(51) Int. Cl.⁴: **B 60 K 17/34,** B 60 K 17/22

(21) Anmeldenummer: **85900459.0**

(22) Anmeldetag: **19.12.84**

(86) Internationale Anmeldenummer:
**PCT/EP 84/00412**

(87) Internationale Veröffentlichungsnummer:
**WO 85/03042 (18.07.85 Gazette 85/16)**

(54) **MEHRACHSFAHRZEUG MIT EINZELRADANTRIEBEN.**

(30) Priorität: **13.01.84 PCT/EP84/00008**

(43) Veröffentlichungstag der Anmeldung:
**20.11.86 Patentblatt 86/47**

(45) Bekanntmachung des Hinweises auf die Patenterteilung:
**04.11.87 Patentblatt 87/45**

(84) Benannte Vertragsstaaten:
**AT CH DE FR GB LI**

(56) Entgegenhaltungen:
**EP-A-0 099 790**
**DE-A-2 835 865**
**DE-C-734 379**
**FR-A-810 821**
**FR-A-861 057**
**GB-A-12 038**
**GB-A-104 384**
**GB-A-1 060 660**
**US-A-3 768 821**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **EHRLINGER, Friedrich, Karl- Weiss- Str. 15, D-7990 Friedrichshafen (DE)**
Erfinder: **GOEFT, Manfred, Lindenstr. 28, D-7990 Friedrichshafen (DE)**

(74) Vertreter: **Raue, Reimund, Zahnradfabrik Friedrichshafen AG Löwentaler Strasse 100 Postfach 2520, D-7990 Friedrichshafen 1 (DE)**

## Beschreibung

Die Erfindung betrifft ein Mehrachsfahrzeug mit Einzelradantrieben nach dem Oberbegriff des Anspruches 1 und richtet sich insbesondere auf Verbesserungen für einzelradgefederte Mehrzweckfahrzeuge, die sowohl hohe Geschwindigkeiten als auch rauhes Gelände ertragen können sollen. Fahrzeuge dieser Art, bei welcher die Räder von außermittig und in Radnähe angeordneten Antriebssträngen über Kegelradverteilergetriebe antreibbar sind, zeigt die FR-A-831 375. Daraus wird jedoch keine Lehre vermittelt, wie eine zwecks geringstmöglicher Bodenfreiheitsbeschränkung und niedrigstem und breitestem Fahrzeugflur erstrebte größtmögliche Radnähe der Verteilergetriebe auch mit Gelenkachsen erreicht werden kann, ohne damit durch die Radnähe entweder die Federwege der Einzelantriebswellen beschränken oder deren Gelenke mit ungünstigen Auslenkwinkeln betreiben zu müssen. Wenn zwischen Verteilergetriebe und Rad bzw. Radgetriebe zwecks Tieflegung des Fahrzeugflures bzw. Erhaltung größtmöglicher Bodenfreiheit und Verbreiterung des tiefgelegenen Fahrzeugflures nur sehr kurze Abstände bleiben, so sind alle bisher bekannten Lösungen mit radnah angeordneten Verteilergetrieben unbefriedigend.

Radantriebe, bei denen Verteilergetriebe und Rad durch Verbindungswellen über Gelenke verbunden sind, sind zwar ebenfalls lange bekannt. So zeigt z. B. R. Bussien, "Automobiltechnisches Handbuch", Technischer Verlag H. Cram, Berlin 1942, 15. Auflage, Bild 53 auf Seite 514, schon eine Frontantriebswelle, bei der eine Achswelle getriebeseitig im einen Gelenk liegt. Jedoch war es dort durch die Plazierung des Getriebes nahe der Fahrzeugmitte möglich, eine relativ lange Achswelle mit relativ kleinen Auslenkwinkeln anzuwenden. Dieses Prinzip entspricht daher nicht der Forderung nach Einbaubarkeit der Verteilergetriebe in die unmittelbare Radnähe und ist auch nicht anwendbar für Fahrzeuge mit mehr als einer angetriebenen Achse, bei denen große Bodenfreiheit verlangt ist.

Ein Radantrieb, bei welchem Gelenk und Getriebe zu einer kompakten Baueinheit mittels einer topfartigen Lagerung des Gelenkes zusammengefaßt sind, ist aus der DE-C-734 379 bekannt. Dort ist der Gelenkmittelpunkt zwar innerhalb einer ein Kegelrad des Verteilergetriebes tragenden Hohlwelle platzsparend untergebracht, gleichzeitig ist damit aber infolge einer beiderseitigen Lagerung dieser Welle die Möglichkeit versperrt, daß das Getriebe von einem geraden, weiterführenden Antriebsstrang zu parallel getriebenen weiteren Achsen durchkreuzt werden kann. Da dies eine Voraussetzung zur Realisierung von Mehrachsfahrzeugen mit mehr als zwei angetriebenen Achsen ist, läßt sich der bekannte Radantrieb für Fahrzeuge mit mehr als zwei angetriebenen Achsen oder in Fällen, in denen im Verteilergetriebe Kupplungen oder Nebenabtriebe liegen, nicht einsetzen.

Ein Mehrachsfahrzeug dieser Gattung, bei dem also die einzelnen Verteilergetriebe für die zu den Rädern führenden Gelenkwellen von weiterführenden Antriebssträngen gekreuzt werden, zeigt die DE-A-28 35 865. Das Gelenk ist hier jedoch nicht in einer topfartigen Lagerung innerhalb des Getriebes, sondern mit beträchtlichem Abstand außerhalb des Gehäuses und radseitig vom Lager der Tellerradwelle angeordnet. Daher ist hiermit keine Verkürzung der Abstände zwischen Rad und Getriebe und auch keine bessere Ausnutzung des Gelenkwellen-Arbeitswinkels für eine höhere Bodenfreiheit usw. erreicht.

Die Aufgabe der Erfindung ist es daher, ein Mehrachsfahrzeug mit Einzelradantrieben in radnahen Antriebssträngen zu schaffen, bei welchen trotz gegebener kurzer Abstände zum Rad bzw. Radgetriebe noch Verbindungswellen mit Gelenken so anschließbar sind, daß sich dennoch eine große Bodenfreiheit und ausreichend große Durchfederungswege so ermöglichen lassen, daß alle Triebelemente normalhohen Ansprüchen gewachsen sein können und sich dabei ein breiter Niederflurboden im Fahrzeug einrichten läßt.

Die Lösung dieser Aufgabe ist gemäß Kennzeichen des Anspruches 1 dadurch erreicht, daß der Drehpunkt des getriebeseitigen Verbindungswellengelenkes nächstmöglich zur jeweiligen Antriebs- bzw. Abtriebsachse gelegt ist, ohne daß dabei die nun den Einbauabstand praktisch vollständig nutzende, also effektiv längere Verbindungswelle noch durch eng umschließende Lagerbuchsen oder Gehäusevorsprünge am Auspendeln gehindert ist, und daß auch für große Federwege der Räder keine ungewöhnlich großen Auslenkwinkel am Gelenk vorgesehen werden müssen. Weiter wird durch diese Anordnung erreicht, daß das Gelenk ohne nennenswerte Biegemomente direkt im Gehäuse des Verteilergetriebes abgestützt ist und darin auch vor Steinschlag und Verschmutzung geschützter ist als bei der üblichen, dem Lager des Getriebes radseitig vorgebauten offenen Anordnung. Die großen Lager ergeben dabei neben hoher Tragzahl noch den Vorteil guter Zugänglichkeit des Gelenkes trotz der kompakten Unterbringung innerhalb der Nabe des Achstreibrades, das im Beispiel als Kegelrad ausgebildet ist, aber ebenso auch als Stirnrad in einem Front- oder Planetengetriebe denkbar sein kann.

Vorteilhafte Weiterbildungen der Erfindung sind in den Unteransprüchen beschrieben.

- Durch eine axial kurze aber radial große Lagerausführung auf dem vom Gelenk ausgehenden Stützbund wird Platz für den Auslenkwinkel geschaffen und gleichzeitig eine hohe Tragsicherheit erreicht.
- Mit einer Schraubverbindung des Stützbundes bzw. des Gelenkaußenringes und des Treibrades gelingt es, neben den Vorteilen der integrierten Gelenkanordnung trotzdem noch, den Innenraum des Getriebegehäuses freizuhalten, z. B. für durchgehende Antriebswellen oder eventuell auch Schaltelement. Zudem wird eine zuverlässige Axialfixierung und ein kurzer direkter Kraftfluß zwischen Treibrad und Verbindungswelle erzielt.

- Bei axialer, getriebeseitiger Anbindung des Gelenkaußenringes an ein Kupplungsstück, welches auf irgendeine an sich bekannte Weise mit der Verbindungswelle kuppelbar ist, kann das Gelenk sogar noch näher zum Kreuzungspunkt der Antriebswellenachse mit der Verbindungswellenachse in das Getriebegehäuse hineinverlegt werden, zumal wenn das Treibrad auf der radabgewandten Innenseite des Getriebegehäuses angeordnet ist.

- Durch die sich zum Getriebe hin verjüngende Ausführung des Abdichtungsbalges am Gelenk passen sich dessen Abmessungen den Pendelausschlägen so weitgehend an, daß nicht nur geringste Materialdehnungen auftreten, sondern auch der im Anspruch genommene axiale und radiale Einbauraum für den Dichtungsbalg ohne Einfluß auf den effektiv nutzbaren Auslenkwinkel der Achswelle ist.

- Die Doppelnutzung des Kupplungsstückes als Gelenkdeckel und Stützbund erspart ebenfalls Länge und auch Gewicht und vereinfacht den Zusammenbau und die Fertigung.

- Eine Ausgestaltung des Schaltgliedes als formschlußgebende Schiebemuffe ist insbesondere für größere Drehmomente vorteilhaft und auch kurzbauend. Indessen sind, ohne das Erfindungsprinzip zu verlassen, hier auch anders funktionierende Schaltglied-Ausführungen möglich. So könnten z. B. Lamellenkupplungen, Überholkupplungen oder Freiläufe bzw. andere selbsttätige Schaltglieder hier ebenfalls so untergebracht werden, daß die Verbindungswellen trotz großer Radnähe der Verteilergetriebe lang genug bleiben können.

- Die Einbeziehung eines Druckmittelstellgliedes in das Getriebegehäuse ergibt ebenfalls dessen günstigen Beschädigungsschutz bei kurzem und verschmutzungssicherem Kraftweg vom Kolben zum Schaltglied, ohne daß dafür unter dem Fahrzeug ein gesonderter Platz freizuhalten wäre.

- Die mehrfach variable Achsanordnungsmöglichkeit nach der Erfindung im gleichgestalteten Getriebegehäuse ergibt nicht nur Fertigungs- und Wartungsvorteile, sondern erleichtert auch die Aneinanderreihung gleicher Verteilergetriebe z. B. über mehrfach gegliederte Antriebsstränge für mehrere angetriebene Achsen, von denen einzelne Getriebe abschaltbar sein können. Die verbindenden Antriebswellen müssen dabei nicht ebenfalls mit Gelenken versehen sein.

- Mit der Beibehaltung großer Achskegelräder durch Belassung einer bei etwa 1 : 1 liegenden Treibradübersetzung und ein entsprechend hoch untersetzendes Radkopfgetriebe wird nicht nur die Verteilung auf weitere Abtriebe begünstigt, sondern auch Platz zur Einbeziehung des Gelenkes in das Treibrad geschaffen und die Verbindungswelle noch weiter mit geringstmöglichem Drehmoment beansprucht, also schlank gehalten für kleine, bewegliche Gelenke mit relativ großen Auslenkwinkeln trotz kurzer Gesamtwellenlänge.

- Auch die Einbeziehung der Gelenkanordnung in ein Radnabengetriebe gibt sinngemäße Vorteile und ermöglicht eine größere Gesamtwellenlänge bei kurzem Abstand der Getriebe selbst.

Die Erfindung wird im folgenden anhand der Zeichnungen von schematischen Ausführungsbeispielen näher erläutert.

Fig. 1 zeigt ein Getriebeanordnungsschema für ein Mehrachsfahrzeug mit radnahen Antriebssträngen.

Fig. 2 zeigt hierzu einen Querschnitt durch den Bodenbereich des Fahrzeuges.

Fig. 3 zeigt ein Verteilergetriebe für Radnabeneinbau mit quer zu einer durchgehenden Antriebswelle abzweigende Verbindungswelle.

Fig. 4 zeigt ein gleichartiges Verteilergetriebe mit einer Weiteren, koaxial zur Verbindungswelle abgehenden Abtriebswelle.

Fig. 5 zeigt eine Ausführung gemäß Fig. 3, jedoch mit Abschaltmöglichkeit durch eine Schiebemuffe.

Fig. 6 zeigt eine Ausführung gemäß Fig. 4, jedoch auch mit Abschaltmöglichkeit durch eine Schiebemuffe.

Fig. 7 zeigt eine Ausführung des Verteilergetriebes als Planeten-Radgetriebe.

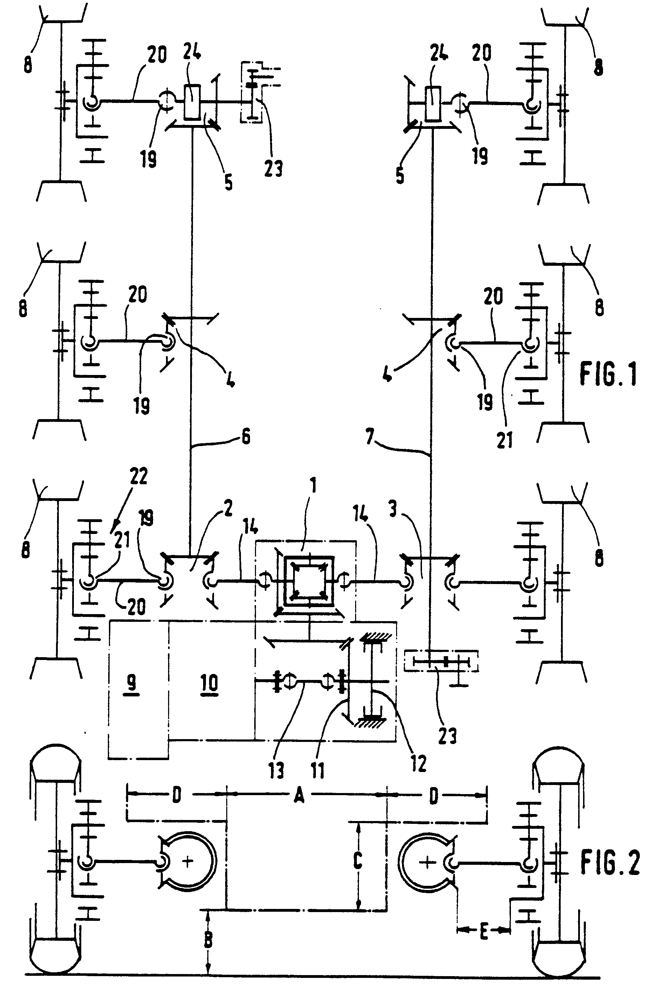

In Fig. 1 ist ein Mehrachsfahrzeug mit drei einzelradgetriebenen Achsen dargestellt, welche alle über ein mittiges 1 und weitere radnahe Verteilergetriebe 2, 3, 4, 5, einzeln antreibbar sein sollen. Man hat auf an sich bekannte Weise zwei Antriebsstränge 6, 7 gewählt, welche möglichst nahe an die Räder 8 gelegt sind, um im Mittenbereich des Fahrzeuges eine große Bodenfreiheit bei hinreichender Breite zu erreichen, bzw. um den Laderaum tief herunterziehen zu können. Dem quer angeordneten Motor 9 und Schaltgetriebe 10 ist ein Primärkegeltrieb 11 mit angeschlossener Feststellbremse 12 nachgeordnet, welcher je nach Höhenverhältnissen auch über eine Gelenkwelle 13 antreibbar ist und seinerseits starr in einen Achsmittentrieb 1 (Hauptdifferential) eintreibt, aus dem zu jeder Seite, eventuell als Gelenkwellen ausbildbare Differentialwellen 15 zu einem radnahen Verteilergetriebe 2, 3, weiterführen. Im Beispiel sind diese mit Antriebswellenende 16 sowie koaxialen 17 und einem (bei 2) bzw. zwei rechtwinkligen Abtrieben 18 (bei 3) vorgesehen. Die koaxialen Abtriebe 17 gehen hier über ein in das Verteilergetriebe 2 bzw. 3 einbezogenes Gelenk 19, in dem die jeweilige Verbindungswelle 20 nächstmöglich zur Getriebemitte gelagert ist. Die Mitte des Verteilergetriebes 2 bzw. 3 befindet sich in der Regel bei voll belastetem Fahrzeug etwa auf Höhe der Mitte des zugeordneten Rades 8 und diesem so nahe, wie es die Verbindungswelle 20 bzw. deren Gelenke 19 im Verteilergetriebe 2 bzw. 3 und 21 im Rad 8 bzw. im Radgetriebe 22 gestatten. Diese Nahe wird erfindungsgemäß insbesondere durch den Längengewinn aufgrund der Integration der Gelenke 19 in die jeweiligen Getriebe gegenüber bisher bekannten Gelenkwellenausführungen noch erheblich verstärkt, ohne daß die Verbindungswellen 20 dabei zu kurz bzw. ihre Auslenkwinkel an den Gelenken 19, 21 zu groß werden. Wo erforderlich können Auslenkwinkel von mehr als 50° vorgesehen werden. Letztlich ist es bei solchen Anwendungen, wenn die Achswellendrehzahlen vor den Gelenken noch relativ hochgehalten werden und erst das folgende Radgetriebe 22 mit einer hohen Untersetzung ausgeführt wird, die dann zu größeren Momenten und entsprechenden Wellendurchmessern führt. Dadurch bleibt nämlich das Drehmoment in der Verbindungswelle 20 klein und sie kann dünn bzw. mit kleinen Gelenken 19, 21 ausgeführt werden. Auch die von den im Beispiel dem Achsmittengetriebe 1 nächstgelegenen Verteilergetriebe 2 bzw. 3 weiterführenden Antriebsstränge 6 bzw. 7 können klein bzw. leicht gehalten werden. Das im Beispiel rechts gelegene erste radnahe Verteilergetriebe 3 verfügt über eine zweite rechtwinklige Abzweigung, z. B. für einen Zapfwellenanschluß 23. Ist vom jeweiligen parallel zur Fahrtrichtung gelegenen Antriebsstrang 6 bzw. 7 nur ein einfacher Einzelradantrieb seitlich abzuzweigen, so genügt eine Ausführung des Verteilergetriebes mit durchgehender Antriebswelle und rechtwinkligem Abgang 4. Dabei ist es natürlich möglich, außer der Achswelle 20 auch die in das betreffende Verteilergetriebe 4 eintreibenden Antriebsstrangenden auf gleiche Weise mit Gelenken anzuschließen, falls ein flexibler Fahrzeugrahmenaufbau vorhanden ist. Der Übersichtlichkeit halber sind solche Gelenke jedoch hier nicht gezeichnet. Die Verteilergetriebe mit durchgehender Antriebswelle 6 bzw. 7 und einer rechtwinklig abgehenden Verbindungswelle 20 haben vorzugsweise gleiche Hauptabmessungen wie solche mit koaxial zur Achswelle 20 eintreibender Antriebswelle 14 (2 bzw. 3) und auch solche 5, mit einer eingebauten Abschaltvorrichtung 24, wie sie vorzugsweise an den Lenkachsen des Mehrachsfahrzeuges vorgesehen werden. - Die Vorteile der Erfindung kommen selbstverständlich auch bei anderen Achsenanordnungen zum tragen. So wären ebenso auch Fahrzeuge mit noch mehr Einzelradantrieben als auch Fahrzeuge mit nur 4 Einzelradantrieben und mit anderen Zuordnungen von Achsmittengetrieben (bzw. Differentialen) 1 zu Schaltgetrieben 10 bzw. Motoren 9 nach gleichem Grundprinzip mit gleichen Vorteilen denkbar, ohne auf die erfindungsgemäßen Merkmale und Vorteile (Bodenfreiheit, Achswellenschonung, Niederflurboden etc.) verzichten zu müssen.

Fig. 2 zeigt einen Schnitt durch die Getriebeanordnung mit der durch die Radnähe der Antriebsstränge erreichten in Breite A gewonnenen Bodenfreiraumes, welcher um die Bodenfreiheit B über dem Gelände liegend eine Tieferlegung des Fahrzeugbodens um das Maß C ermöglicht. Der über den Verteilergetrieben verbleibende Laderaum mit der Breite D kann künftig als Sitzfläche für Bänke etc. verwendet werden. Entscheidend für die Breite A des Nieder-flurbodens ist wegen der vorgegebenen Abmessungen der Verteilergetriebe die Einbaulänge E der Verbindungswellen zu den Rädern.

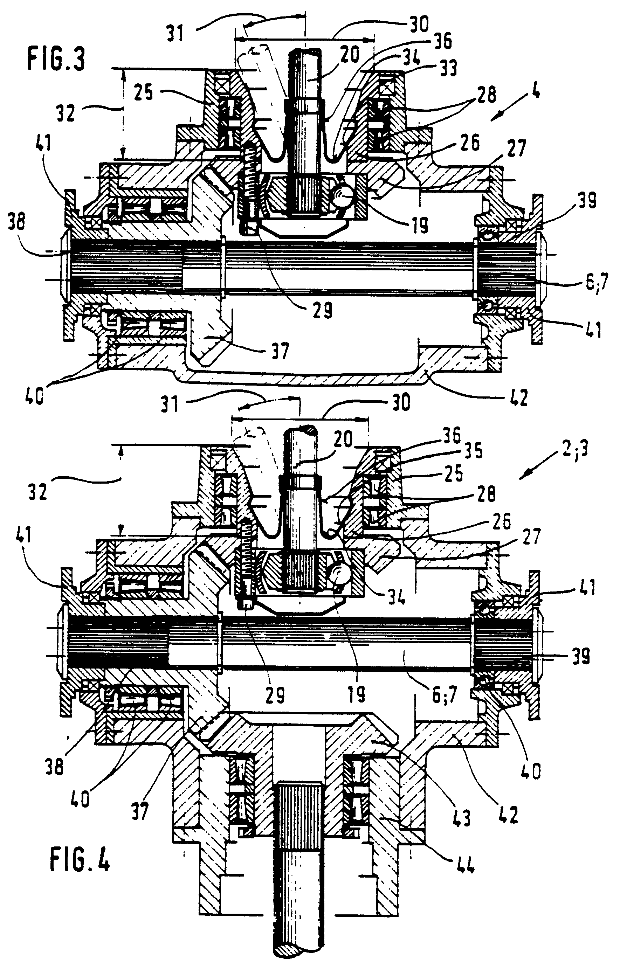

Fig. 3 zeigt das einfache Getriebe 4 mit der von der durchgegehenden Antriebswelle 6 bzw. 7 rechtwinklig abzweigenden Achswelle 20 und dem in das Gehäuse 25 weitestmöglich hereingezogenen Gelenk 19. Dabei ist zwischen das Gelenk 19 und seinem radseitig vorgeordneten Stützbund 26 noch das hier als Kegelrad ausgeführte Treibrad 27 eingesetzt, so daß dieses zusammen mit dem Gelenk 19 über die den Stützbund 26 tragenden Gehäuselager 28 der Achswelle 20 gemeinsam abgestützt geführt ist. Im Beispiel halten Schraubbolzen 29 Gelenk 19, Treibrad 27 und Stützbund 26 zusammen. Indessen ist auch eine einstückige Ausführung von Gelenkaußenring und Treibrad denkbar. Sowohl der große Durchmesser des Stützbundes 26 als auch seine radseitig zunehmende Erweiterung 30 erlauben der Achswelle 20 völlig ausreichend große Auslenkwinkel 31 bei gleichzeitigem Gewinn an effektiv nutzbarer Achslänge um mehr als die Länge 32 des Stützbundes 26 im Vergleich zu der konventionellen Gelenkanordnung außerhalb von Verteilergetriebegehäusen. Die radseitige Abdichtung erfolgt hier über einen trichterförmigen Dichtungsbalg 33, der zwischen Achswellen 20 und Stützbund 26 so eingespannt ist, daß eine einzige Knickfalte 34 kurz vor das Gelenk 19 zu liegen kommt und seine sonst glatten Mantelflächen 35, 36 den Auslenkwinkel 31 der Achswelle 20 praktisch nicht beeinträchtigen. Wird das Gelenk 19 als sogenanntes innenzentriertes Gleichlaufgelenk ausgeführt, so ist dessen Raumbedarf besonders günstig. Auch dadurch, daß die den Stützbund 26 tragenden Gehäuselager 28 sehr groß, vorzugsweise größer als das Gelenk 19 selbst, vorgesehen sind und daher auch der Stützbund 26 einen großen Durchmesser hat, ergibt sich neben viel Platz für die schwenkende Verbindungswelle 20 auch eine besonders hoch beanspruchbare Treibradlagerung für hohen Leistungsdurchgang und lange Lebensdauer selbst bei unruhigem Drehzahlverhalten. Das gesamte fertig montierte Gelenk 19 kann mit eingesetzter Verbindungswelle 20 zusammen mit dem Stützbund 26 und dem Gehäuselager 28 flanschartig in das Gehäuse 25 eingesetzt und fixiert werden. Das Beispiel der Fig. 3 zeigt das als Kegelrad ausgebildete Treibrad 27 getrieben von einem etwa gleichgroßen Antriebsrad 37 auf der Antriebswelle 6 bzw. 7, welche an beiden Durchtrittsöffnungen 38, 39 des Gehäuses 25, Antriebswellenlager 40 mit Wellendichtungen aufweisen. Die innerhalb des Gehäuses 25 gehaltenen Wellenteilstücke (6 bzw. 7) sind im Beispiel außerhalb des Gehäuses 25 über Wellenanschlüsse 41 mit nicht gezeigten Verlängerungsteilstücken der Antriebsstränge verbindbar. Bei einer dem Gelenk 19 gegenüber angeordneten Öffnungsmöglichkeit des Gehäusebodens 42 ist sowohl eine besonders einfache Gelenkmontage als auch die Verwendung des gleichen Gehäuses 25 für Einsatzzwecke z. B. mit weiteren An- oder Abtriebsrädern 43 (z. B. für einen Doppelabtrieb, einen Zapfwellenabtrieb 23 oder dergleichen), wie er in Fig. 4 im Detail dargestellt ist. - Hier ist im Gehäuseboden 42 ein Lagerstutzen 44 für ein solches zweites An- oder Abtriebsrad 43 und seine zugehörige Welle (z. B. 14) vorgesehen, welche hier gewünschtenfalls auf gleiche Weise mit einem Gelenk 19 für die gegenüberliegende Verbindungswelle 20 ausgestattet sein könnte, ohne Mehrbauraum zu erfordern.

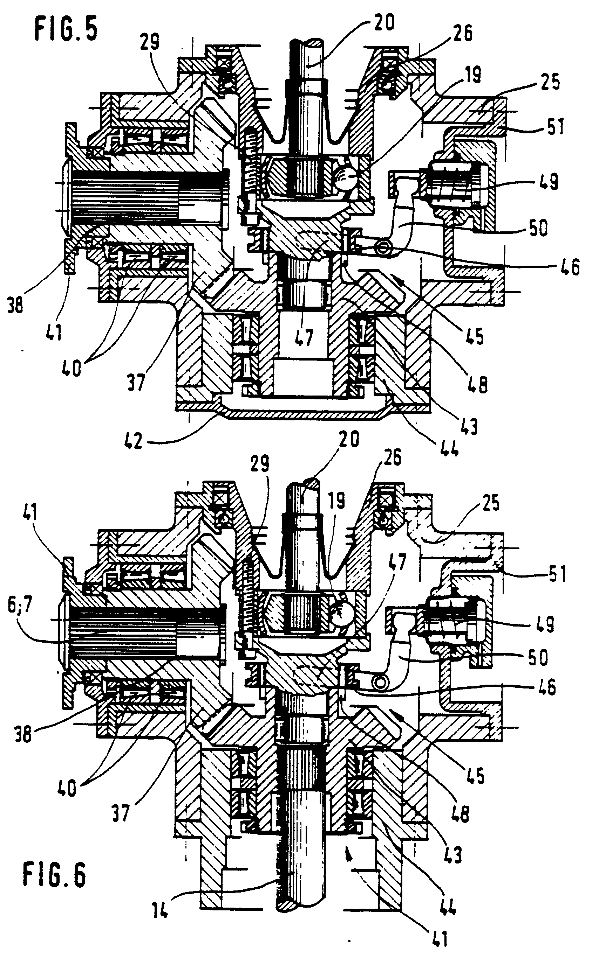

Fig. 5 zeigt das im Prinzip gleiche Gehäuse 25, jedoch ohne eine durchgehende Antriebswelle 6 (7), nur mit rechtwinkligem Abtrieb zur Verbindungswelle 20, jedoch mit einer Abschalteinrichtung 45 derselben vom Antriebsstrang. Die Abschaltbarkeit 45 ist hier ein eine Schiebemuffe 46 tragendes Kupplungsstück 47, das mit dem Stützbund 26 des Gelenkes 19 umläuft, ausgebildet. Durch die Schiebemuffe 46 kann es mit einer Schaltverzahnung 48 des auf der dem Gelenk 19 gegenüberliegenden Seite des Gehäuses 25 angeordneten Antriebsrades 43 trieblich verbunden werden. Ein mit dem Gelenk 19 unmittelbar verbundenes Antriebsrad 27 entfällt bei dieser Variante. Die Schiebemuffe 46 ist hier betätigbar über ein im Gehäuse 25 gelagertes und durch ein auch ins Gehäuse 25 eingelassenes Druckmittelstellglied 49 mit verschieblichem Schalthebel 50 und ist zugänglich über einen weiteren Gehäusedeckel 51, der rechtwinklig zur Verbindungswelle 20 angeordnet ist.

Der Wegfall der durchgehenden Antriebswelle 6 (7) ermöglicht es bei dieser Anordnung der Antriebs- und Abtriebsräder 37, 43, daß das Gelenk 19 bis fast zur Mitte des Abtriebsrades 37 in das Zentrum des Getriebegehäuses 25 hereingezogen wird, weil der Längengewinn 32 für die Achswelle 20 sich etwa um die Stärke der Welle 6 bzw. 7 vergrößern läßt und auch der Stützbund 26 wegen Wegfall des direkten Antriebsrades 27 nur ein kürzer bauendes Gehäuselager 28 haben muß. Die Abschalteinrichtung 45 läßt sich bei nach gleichem Prinzip erfolgender Anordnung auch auf andere Weise, z. B. mit Lamellenkupplung, Selbstsperrdifferential, Überholkupplung und ähnlichem erreichen, jedoch bleibt unverändert der durch die erfindungsgemäße Anordnung erzielte Vorteil der deutlich länger als dem Lichtraum 4 zwischen Rad 8 bzw. Radnabengetriebe 22 und den Verteilergetrieben 1...5 entsprechenden Einbauraum ausführbaren Verbindungswellen 20 und der beschädigungsgesicherten Integrierung des Gelenkes 19 in das Getriebegehäuse 25. Diese kommen insbesondere solchen Mehrachsfahrzeugen zugute, die auch im Gelände bzw. auf schlechten Wegen eingesetzt werden müssen und gegen die dort auftretenden Fahrwerksbeanspruchungen durch großhubige Einzelradfederungen zu schützen sind.

Dabei ist es besonders vorteilhaft, für die Integration der Gelenke in die Verteilergetriebe sogenannte Verschiebegelenke verwenden zu können, die auch einen axialen Ausgleich in der Gelenkwelle ermöglichen.

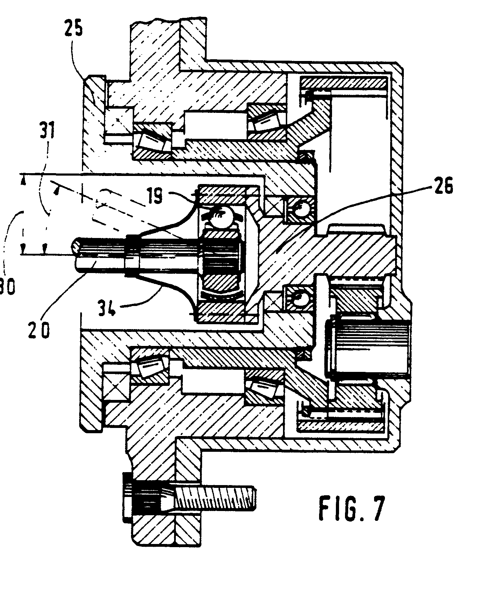

Fig. 7 zeigt das Verteilergetriebe als Radkopfgetriebe mit einem Planetengetriebe, in welches das Gelenk 19 ebenfalls gemäß den Merkmalen der Erfindung bis getriebeseitig von den Achslagern in das Getriebegehäuse 25 hineingebaut ist, so daß hierdurch die wirksame Lange der Verbindungswelle 20 (Abstand der Gelenke an den Verbindungswellenenden) um etwa die halbe Radkopflänge verlängert wird, ohne den Auslenkwinkel zu beeinträchtigen. Der Stützbund 26, an welchem die Außenringe des Gelenkes 19 befestigt sind, ist hier zudem gleichzeitig Sonnenradwelle, welche in einem Hohlradträger gelagert ist. Das Radlager ist mit den gleichen Muttern, die auch das Hohlrad festhalten, auf dem Nabenträger fixiert. Der Längenbedarf des Gelenkes in der Nabe entspricht etwa dem des großen, eng beieinanderstehenden Achslager. Für besonders wenig Baulänge und die Möglichkeit, entsprechend große Sonnenräder zu verwenden, kann auch der Stützring 26 bzw. der Außenring des Gelenkes 19 unmittelbar als Sonnenrad außenverzahnt werden, um den dann das Planeten- bzw. Radkopfgetriebe herumgebaut ist.

**Patentansprüche**

1. Mehrachsfahrzeug mit Einzelradantrieben,
- welches über nahe bei seinen Rädern (8) gelegene, von einem Achsmittengetriebe (1) abgezweigte Seitenantriebsstränge (6, 7) verfügt,
- und in welchem Verteilergetriebe (2 bis 5) mit daran angelenkten Verbindungswellen (20) vorgesehen sind,
- wobei die Verbindungswellen (20) an ihren Enden mindestens je ein Gelenk (19) aufweisen,
  dadurch gekennzeichnet ,
- daß jede Verbindungswelle (20) mit ihrem dem Verteilergetriebe (2 bis 5) zugewandten Gelenk (19) in ein wenigstens zwei Treibräder des Verteilergetriebes (2 bis 5) umschließendes Gehäuse (25) hineinragt,

- daß die Verbindungswelle (20) mit ihrem dem Verteilergetriebe (2 bis 5) zugewandten Gelenk (19) über einen Stützbund (26) und ein Gehäuselager (28) in dem Gehäuse (25) gelagert ist,
- daß der Stützbund (26) um ein durch das Gehäuselager (28) bestimmtes Maß (32) aus dem Gehäuse (25) vorragt und
- daß das Gelenk (19) in Richtung auf das Gehäuseinnere innerhalb des Gehäuselagers (28) angeordnet ist.

2. Fahrzeug nach Anspruch 1, dadurch gekennzeichnet, daß das Gelenk (19) innerhalb des Gehäuses (25) oder an der Wand des Getriebes (2...5) axial gehalten und radseitig von einem Stützbund (26) umgeben ist, welcher einen so großen Innendurchmesser hat und auf so großen Gehäuselagern (28) umläuft, sowie eine nur so geringe radseitige Länge (32) aufweist, daß die von ihm mit Abstand umfaßte Verbindungswelle (20) der Getriebe (25) auch bei einem mehr als 30° großen Auslenkwinkel (31) ihm gegenüber außer Anlage bleibt.

3. Fahrzeug nach Anspruch 1 oder 2, dadurch gekennzeichnet, daß der Stützbund (26) des Gelenkes (19) sowohl mit einem Außenring desselben als auch mit einem koaxial zur Verbindungswelle (20) angeordneten Treibrad (27) des Verteilergetriebes (2...7) verschraubt ist.

4. Fahrzeug nach einem der vorgehenden Ansprüche, dadurch gekennzeichnet, daß dem Stützbund (26) bzw. dem Gelenk (19) getriebeseitig ein Kupplungsstück (47) angebaut ist, welches über ein Schaltglied (50) mit dem Treibrad (27 bzw. 43) des Verteilergetriebes (2...5) kuppelbar ist.

5. Fahrzeug nach einem der vorgedenden Ansprüche, dadurch gekennzeichnet, daß das Gelenk (10) radseitig durch einen sich trichterförmig erweiternden Dichtungsbalg (33) und getriebeseitig durch einen als Kupplungsstück (47) ausführbaren Deckel verschlossen ist.

6. Fahrzeug nach Anspruch 5, dadurch gekennzeichnet, daß das Kupplungsstück (47) mit dem Stützbund (26) einstückig ist.

7. Fahrzeug nach einem der Ansprüche 4 bis 6, dadurch gekennzeichnet, daß das Schaltglied (50) eine sowohl auf einer Außenverzahnung des Kupplungsstückes (47) als auch auf einer dem Gelenk (19) gegenübergelegenen Schaltverzahnung (48) des kupplungsseitig vorgeordneten Treibrades (43) mittels eines im Gehäuse (25) gelagerten, fernbedienbaren Schalthebels aufschiebbare Schiebemuffe (46) ist.

8. Fahrzeug nach einem der Ansprüche 4 bis 7, dadurch gekennzeichnet, daß das Schaltglied (50) über ein im Gehäuse (25) des Verteilergetriebes (2...5) angeordnetes Druckmittelstellglied (49) betätigbar ist.

9. Fahrzeug nach einem der vorgehenden Ansprüche, dadurch gekennzeichnet, daß das Gehäuse (25) des Verteilergetriebes (2...5) sowohl mit einer die Achse der Verbindungswellen (20) kreuzenden durchgehenden Antriebswelle (6/7) als auch zusätzlich mit einer koaxial dazu angeordneten Antriebswelle (14) bei gleichen Hauptabmessungen bestückbar ist.

10. Fahrzeug nach einem der vorgehenden Ansprüche, dadurch gekennzeichnet, daß das Übersetzungsverhältnis der Treibräder (27, 43) etwa 1 : 1 beträgt und der Verbindungswelle (20) ein Nachschaltgetriebe mit mehr als 2 : 1 Untersetzung nachgeordnet ist.

11. Fahrzeug nach einem der vorgehenden Ansprüche, dadurch gekennzeichnet, daß der Stützbund (26) mit einem Abtriebsrad (27) einstückig ausgebildet ist.

12. Fahrzeug nach Anspruch 11, dadurch gekennzeichnet, daß das Abtriebsrad (27) als getriebeseitiger Deckel (43) des Gelenkes (19) bzw. des Stützbundes (26) dient.

13. Fahrzeug nach einem der vorstehenden Ansprüche, dadurch gekennzeichnet, daß das Verteilergetriebe ein Planetengetriebe für den Antrieb des Rades (8) innerhalb desselben ist und der Stützbund (26) gleichzeitig Sonnenwelle des Radgetriebes, an die das Gelenk (19) angeflanscht ist.

14. Fahrzeug nach einem der vorstehenden Ansprüche, dadurch gekennzeichnet, daß das ins Gehäuse (25) einbezogene Gelenk (19) ein innen zentriertes Gleichlaufgelenk ist.

## Claims

1. Multiple axle vehicle with independent wheel drives
- with a central axle drive (1) arranged close to the wheels (8) with branched transmission lines (6, 7),
- and in which distribution gears (2 - 5) with attached transmission shafts (20) are planned,
- where the transmission shafts (20) have at least one joint (19) each on their ends, characterized in that,
- every transmission shaft (20) with its joint (19) facing the distribution gears (2 - 5) projects into a casing (25) where at least two drive wheels of the distribution gears (2 - 5) are located,
- the transmission shaft (20) with its joint (19) facing the distribution gears (2 - 5) is mounted with a supporting collar (26) and a casing bearing (28) in the casing (25),
- the supporting collar (26) projects out of the casing (25) by a certain amount (32) which is determined by the casing bearing (28), and
- that the joint (19) facing the inside of the casing is located inside the casing bearing (28).

2. Vehicle according to claim 1 characterized in that, joint (19) inside the casing (25) or on the transmission casing (2 - 5) is axially fixed and sleeved on the wheel end by a supporting collar (26), which has so large an internal diameter, and runs in casing bearings (28) of such a size and whose length of protrusion (32) is so small that the transmission shaft (20) enveloped by them at a distance between drive casing (25) will remain out of contact even at an angle of excursion (31) of more than 30° with respect to the outer edges of the supporting collars (26).

3. Vehicle according to claim 1, characterized in that the supporting colar (26) of a joint (19) is bolted to an external ring of the former as well as to a drive wheel (27) of the distribution gears (2 - 7) arranged coaxially to the connecting shaft (20).

4. Vehicle according to one of the preceding claims, characterized in that, a coupling piece (47) is joined to the supporting collar (26) or to the joint (19) on the drive side, which can be coupled to the drive wheel (27) or (43), respectively of the distribution gears (2 - 5) via a shift element (50).

5. Vehicle according to one of the preceding claims, characterized in that, the joint (10) is closed off on the wheel side by means of a sealing bellows (33) which widens in the shape of a funnel, and on the drive side by a cover which can be designed as a coupling piece (47).

6. Vehicle according to claim 5, characterized in that the coupling piece (47) forms a single unit with the supporting collar (26).

7. Vehicle according to one of the claims 4 to 6, characterized in that the shift element (50) is a sliding sleeve (46), slidable upon the external gearing of coupling piece (47) as well as on the shift gearing (48) lying opposite joint (19) on the drive wheel (43) located on the coupling side, by means of a remotely operable shift lever mounted in casing (25).

8. Vehicle according to one of the claims 4 to 7, characterized in that shift element (50) can be actuated by means of a pressure control valve (49) located in the casing (25) of the distribution gears (2 - 5).

9. Vehicle according to one of the preceding claims, characterized in that casing (25) of the distribution gears (2 - 5) with the same overall dimensions, can be equipped with an uninterrupted drive shaft (6/7) crossing the axis of the transmission shafts (20), as well as, in addition, with a drive shaft (14) coaxial thereto.

10. Vehicle according to one of the preceding claims, characterized in that the gear ratio between drive wheels (27, 43) is approximately 1 : 1, and that the transmission shaft (20) is followed by a rear-mounted transmission with more than 2: 1 reduction.

11. Vehicle according to one of the preceding claims, characterized in that the supporting collar (26) forms a single unit with a drive wheel (27).

12. Vehicle according to claim 11, characterized in that, the output gear (27) serves as a cover (43) on the drive side for the joint (19) or the supporting collar (26).

13. Vehicle according to one of the preceding claims, characterized in that the distribution gear is a planetary drive for actuation of wheel (8) within the latter, and that the supporting collar (26) is at the same time the sun wheel of the wheel drive, to which the joint (19) is flange-mounted.

14. Vehicle according to one of the preceding claims, characterized in that joint (19), included in the casing (25) is a synchronous joint centered inwardly.

**Revendications**

1. Véhicule à essieux multiples avec entraînement individuel de roues,
- qui comporte des arbres de transmission latéraux (6, 7) disposés près des roues (8) et entraînés à partir d'une boîte centrale de pont (1),
- et dans lequel sont prévues des boîtes de transfert (2 à 5) sur lesquelles sont articulés des arbres de liaison (20)
- ces arbres de liaison (20) comportant chacun au moins une articulation (19) à leurs extrémités
   caractérisé en ce que :
- chaque arbre de liaison (20) s'étend, avec son articulation (19) située du côté de la boîte de transfert (2 à 5), jusqu'à l'intérieur d'un carter (25) renfermant au moins deux pignons d'entraînement de la boîte de transfert (2 à 5),
- l'arbre de liaison (20), avec son articulation (19) située du côté de la boîte de transfert (2 à 5), est monté sur palier dans le carter (25) au moyen d'une bague de support (26) et d'un palier de boîte (28),
- la bague de support (26) forme une saillie par rapport au carter (25) sur une distance (32) déterminée par le palier de boîte (28) et
- l'articulation (19) est disposée en direction de l'intérieur du carter à l'intérieur du palier de boîte (28).

2. Véhicule selon la revendication 1, caractérisé en ce que l'articulation (19) est maintenue axialement à l'intérieur du carter (25) ou contre la paroi de la boîte de transfert (2 à 5) et est entourée côté roue par une bague de support (26) qui a un diamètre intérieur suffisamment grand, tourne dans un palier de boîte (28) suffisamment grand et présente côté roue une longueur (32) suffisamment faible pour que l'arbre de liaison (20) qu'elle entoure à distance reste sans contact avec elle-même pour un angle de déviation (31) dépassant 30°.

3. Véhicule selon la revendication 1 ou 2, caractérisé en ce que la bague de support (26) de l'articulation (19) est vissée à la fois à une bague extérieure de l'articulation et à un pignon d'entraînement (27) de la boîte de transfert (2...7), monté coaxialement par rapport à l'arbre de liaison (20).

4. Véhicule selon l'une des revendications précédentes, caractérisé en ce que la bague de support (26) et l'articulation (19) sont associées, du côté de la boîte à une pièce d'embrayage (47) prévue pour être accouplée au pignon d'entraînement (27 ou 43) de la boîte de transfert (2... 5) au moyen d'un organe de commande (50).

5. Véhicule selon l'une des revendications précédentes, caractérisé en ce que l'articulation (10) est fermée côté roue par un manchon

**0 201 493**

d'étanchéité (33) évasé en forme d'entonnoir, et côté boîte par un couvercle réalisable sous forme d'une pièce d'embrayage (47).

6. Véhicule selon la revendication 5, caractérisé en ce que la pièce d'embrayage (47) est d'une pièce avec la bague de support (26).

7. Véhicule selon l'une des revendications 4 à 6, caractérisé en ce que ledit organe de commande (50) est un manchon coulissant (46) qu'on peut engager à la fois sur une denture extérieure de la pièce d'embrayage (47) et sur une denture (48) prévue en regard de l'articulation (19) sur le pignon d'entraînement (43) précédant cet embrayage, au moyen d'un levier commandé à distance et porté par un palier dans le carter (25).

8. Véhicule selon l'une des revendications 4 à 7, caractérisé en ce que ledit organe de commande (50) est actionné par un actionneur (49) à pression de fluide disposé dans le carter (25) de la boîte de transfert (2... 5).

9. Véhicule selon l'une des revendications précédentes, caractérisé en ce que le carter (25) de la boîte de transfert (2.. 5) est équipé pour recevoir, avec les mêmes dimensions principales, à la fois un arbre de transmission traversant (6/7) qui croise l'axe de l'arbre de liaison (20), et un autre arbre de transmission (14) disposé coaxialement à ce dernier.

10. Véhicule selon l'une des revendications précédentes, caractérisé en ce que le rapport de transmission des pignons d'entraînement (27, 43) est approximativement de 1 : 1, et en ce que l'arbre de liaison (20) est suivi d'un réducteur de sortie ayant une démultiplication supérieure à 2 : 1.

11. Véhicule selon l'une des revendications précédentes, caractérisé en ce que ladite bague de support (26) est d'une pièce avec un pignon de sortie (27).

12. Véhicule selon la revendication 11, caractérisé en ce que ledit pignon de sortie (27) sert de couvercle (43) de l'articulation (19) ou de la bague de support (26) du côté de la boîte.

13. Véhicule selon l'une des revendications précédentes, caractérisé en ce que la boîte de transfert est une boîte planétaire d'entraînement de la roue (8), disposée à l'intérieur de cette roue, et en ce que l'articulation (19) est bridée à la bague de support (26), qui forme en même temps l'arbre planétaire de cette boîte.

14. Véhicule selon l'une des revendications précédentes, caractérisé en ce que ladite articulation (19) reculée à l'intérieur du carter (25) est un joint homocinétique à centrage intérieur.

FIG.1

FIG.2

FIG.3

FIG.4

FIG.5

FIG.6

FIG. 7